# EUROPEAN PATENT APPLICATION

(11) **EP 3 936 211 A1**
(43) Date of publication of application: **12.01.2022**
(21) Application number: 20185385.0
(22) Date of filing: 11.07.2020
(51) Int. Cl.: B01D 45/14, B01D 19/00, C02F 1/20, C02F 101/16, C02F 103/20

(54) **REACTOR FOR TREATING SEWAGE AND WASTE MATERIAL**

(71) Applicant: PuraSystem AG, 8602 Wangen (CH)
(72) Inventor: SONEGO, Alessandro, 33070 33070 Brugnera (PN) (IT); ITEN, Markus, 8602 Wangen (CH)
(74) Representative: Rutz & Partner

(57) **Abstract**

A reactor which serves for treating a process material (pm), such as sewage or animal waste, and for removing ammonia therefrom, comprises a
- at least one vessel having
- at least one inlet opening for receiving the process material (pm);
- at least one outlet opening for removing or circulating the treated process material (pm, pm31) ;
- at least one exit opening for removing extracted gas (pm32) stripped from the process material (pm, pm31); and
- at least one gas pump (42), which is arranged adjacent to the exit opening and with which the extracted gas (pm32) is transferable towards an concentration tank..

According to the invention a separator unit (S) with at least one separator stage (S1, S*) is provided, which comprises a separator channel (430, 430*), through which the extracted gas (pm32) is transferable towards the at least one gas pump (42), and at least one separator rotor (43; 43*) rotatable within the separator channel (430, 430*) to allow transfer of extracted gas (pm32) to an inlet opening (4291) of the gas pump (42) and to shield the inlet opening (4291) of the gas pump (42) against the entry of non-gaseous process material (pm, pm31).

## Description

The present invention relates to a reactor for treating a process material, such as sewage and waste, particularly animal waste, in order to remove gaseous components such as ammonia.

### BACKGROUND OF THE INVENTION

According to Susan W. Gay, et al., Ammonia Emissions and Animal Agriculture, Virginia State University 2009, agricultural producers are under constant pressure to minimize the impact their management practices have on the environment. Although most environmental concerns related to animal agriculture have focused on water quality during the past two decades, air and water quality issues have become an increasing concern. The occurrence of nitrate in water is a problem. Further, odours have been the main air quality concern related to agricultural animal production. However, ammonia emissions from livestock and poultry operations have recently received significant attention. New air quality standards that cover ammonia emissions in the United States were adopted in 1997. These regulations have a significant impact on the animal production operations. Ammonia (NH₃) is a common by-product of animal waste due to the often inefficient conversion of feed nitrogen into animal product. The microbial decomposition of animal wastes is the main source of ammonia volatilization from animal feeding operations.

According to Li Lin et al., Removal of ammonia nitrogen in wastewater by microwave radiation, Journal of Hazardous Materials, ELSEVIER, Amsterdam 2009; ammonia nitrogen contaminated wastewater poses a great threat on the safety of water resources.

DE102011121598A1 discloses a reactor for the treatment of bio material in a tank under the impact of thermal energy for degassing the source material and ammonia recovery.

In such processes foam is typically occurring in the tanks often leading to blockage or clogging of adjoining tubes and channels, consequently causing problems and reducing the efficiency of processes in progress. Typically this problem arises in processes for the denitrification of slurry. Particularly stripping treatment under the impact of thermal energy, e.g. microwave energy, and possibly insufflation of gases may develop high quantities of foam causing severe problems.

In order to control this problem the intensity of air insufflation is typically reduced, which however also reduces efficiency of the said stripping processes.

### SUMMARY OF THE INVENTION

It is therefore a primary object of the present invention to provide an improved reactor, preferably equipped with heating devices, such as heat exchangers or microwave generators, for treating a process material, particularly sewage or waste, in order to efficiently remove gaseous components such as ammonia.

The reactor shall allow stripping and removing gaseous components with higher purity so that the efficiency of the process is increased and the requirement for post-processing the removed or stripped gaseous components is reduced.

The efficiency of the processes shall be optimized with the insufflation of a gaseous medium such as air causing increased quantities of foam which however shall not cause blockage or clogging of transfer channels and disturbances of the stripping processes.

Furthermore, handling of process material shall be improved so that contamination of the reactor and device parts is avoided.

The elements of the reactor shall have a simple structure and shall require little space, practically no maintenance and practically no additional energy for operation.

The requirement of routine maintenance shall be reduced and the long-term performance of the reactor shall be optimized. Extended operational periods without physical or mental cleaning shall be made possible.

The above and other objects of the present invention are achieved by a reactor as defined in claim 1. Preferred embodiments of the reactor are defined in further claims.

The reactor, which serves for treating a process material, such as sewage or animal waste, and for removing gaseous components such as ammonia therefrom, comprises at least one vessel having
- at least one inlet opening for receiving the process material;
- at least one outlet opening for removing or circulating the treated process material;
- at least one exit opening for removing extracted gas stripped from the process material; and
and at least one gas pump, which is arranged adjacent to the exit opening and with which extracted gas is transferable towards a concentration tank.

The gas pump preferably comprises at least one motor, which drives at least one fan.

Further, in particular for aeration and insufflation and/or for pressure compensation, the vessel preferably has at least one, preferably a plurality of inlet openings, through which gas and/or air can be applied to the process material. The described openings are preferably controllable by valves and a connected control unit.

According to the invention a separator unit with at least one separator stage is provided, which comprises a separator channel, through which the extracted gas is transferable towards the at least one gas pump, and at least one separator rotor rotatable within the separator channel to allow transfer of extracted gas to an inlet opening of the gas pump and to shield the inlet opening of the gas pump against the entry of non-gaseous process material.

Typically, the separator stage is located at the exit opening of the vessel. The exit opening is preferably provided in the top cover but may also be provided at the sidewall of the vessel.

By separating extracted gas, such as ammonia, from foam, liquid and solid particles, the extracted gas is gained with higher purity. Non-gaseous process material does not reach the transfer line leading to the concentration tank or the concentration tank itself, which remain therefore free from contamination and clogging.

The extracted gas, such as ammonia enriched gas, is conveyed into storage tanks to produce ammonia reusable in any technical field. This gas transport can be supported by further gas pumps.

In a preferred embodiment, the separator unit comprises a first separator stage with at least one first separator rotor rotatable in a first section of the separator channel and a second separator stage with at least one second separator rotor rotatable in a second section of the separator channel.

In basic embodiments only the first separator stage is present which prevents foam from entering the gas pump. However in the event that a large quantity of foam occurs, then the first separator stage may get overloaded. Hence, in preferred embodiments a second separator stage is adjoining the first separator stage as an input or preliminary separator stage, which acts as a barrier for the foam so that only a reduced quantity of foam may reach the first separator stage and may there completely be separated from the extracted gas.

In a preferred embodiment, the separator rotor of the first and/or the second separator stage, is rotatably held by a motor shaft of a motor and comprises a plurality of rotor blades that are separated by gaps from one another. The separator rotor or separator rotors, which can be made for example from metal or plastic, allow the extracted gas to pass through the gaps between the rotor blades, while the rotating rotor blades are shielding the inlet opening of the gas pump and preventing the non-gaseous process material from entering the inlet opening of the gas pump.

In order to efficiently shield the separator channel or the inlet opening of the gas pump, the rotor blades of the first and/or the second separator rotor are turned around their longitudinal axis by an angle in the range from 15° - 66° relative to the area or plane through which the rotor blades travel when the separator rotor is rotated. Depending on the direction of rotation the angle can be in the range between +90° and -90°.

In a preferred embodiment, the rotor blades of the separator rotors of the first and/or the second separator stage are arranged radially aligned forming a propeller. In other preferred embodiments the first separator rotor of the first separator stage, which may or may not be connected to the second separator stage, has the form of a basket.

The rotor blades of the first separator rotor are preferably arranged in parallel or inclined to the motor shaft and are forming a cylindrical or conical basket. The tips of the rotor blades may be connected directly to one another at the bottom of the basket or may be connected to a mounting plate, which forms the closed bottom of the cylindrical or conical basket that encloses a separator channel through which the extracted gas can travel to the inlet opening of the gas pump. The mounting plate may also act as a shielding plate and may be provided with openings through which gas can enter the separation channel.

Preferably, the rotor blades are connected with a first end to a ring member and with a second end to the mounting plate that preferably is connected to the motor shaft.

In a further preferred embodiment of the rotor blades of the first and/or the second separator rotor are arranged angularly equidistant from one another. The gaps between the rotor blades and/or the dimensions of the rotor blades are preferably identical.

In the event that the separator rotor has the form of a cylindrical or conical basket, then the lateral area of the cylindrical or conical basket is the area, along which the rotor blades travel when the separator rotor is rotated. The rotor blades are fixedly turned and arranged such that when the separator rotor is rotated, the leading edge of the rotor blades is closer to the axis of rotation than the trailing edge of the rotor blades. Hence, in a region in front of the separator rotor non-gaseous process material, particularly foam, is accelerated and radially ejected towards the side wall of the vessel or towards a preferably tubular wall of the separator channel.

The rotor blades of the basket-like separator rotor may have a symmetrical or asymmetrical form, preferably have at least approximately the form of a rectangle, a rhomboid, a triangle, and/or are provided with straight or curved edges. Preferably the leading edge of the rotor blades is curved such that a separator channel is provided with dimensions that allow accommodation of a cylindrical tube or a fan used for accelerating the gas stream.

In order to ensure reliable separation even at a lower speed of rotation, the neighbouring rotor blades of the first and/or the second separator rotor are preferably designed and arranged such that they overlap one another. The rotor blades overlap one another preferably like shingles that form a wall that is traversed by slots. In this embodiment, the rotor blades are shielding the separator channel or the inlet opening without a visible opening in a view perpendicular thereto. Foam, liquid and solid particles of the process material will therefore hit the rotor blades and will get rejected, while the extracted gas can enter the separator channel or the inlet opening along a curved path through the gaps or slots between the rotor blades.

In the embodiment of a conventional propeller, the first and/or the second separator rotor are used to push back and compress the foam. Typically the second separator rotor is provided in the form of a propeller which is preventing foam to reach the first separator rotor that is preferably provided in the form of a basket.

Depending on their functions and dimensions the first separator rotor and the second separator rotor may be turned with the same speed of rotation e.g. by a common motor shaft or with different speeds of rotation by different motor shafts. Typically in the event that the first and the second separator rotor have different designs then they may be driven by different motors with different speeds of rotation. Typically, the first separator rotor will be turned with higher speed of rotation.

The first separator rotor may be rotated with a speed of rotation selected in a broad range, preferably in the range between 50 rpm (rounds per minute) and 3000 rpm, while the second separator rotor may be rotated with a speed of rotation selected in a broad range, e.g. in the range between 10 rpm (rounds per minute) and 250 rpm. The speed of rotation is preferably selected depending on the speed of the gas flow traveling through the separator rotor are depending on the foam quantity which may be detected by sensors. However, the speed of rotation of the first separator rotor may be a factor in the range of 0.2 to 300 higher than the speed of rotation of the second separator rotor.

Still further, the first and the second separator rotor have preferably different dimensions. The diameter of the second separator rotor corresponds preferably to the inner diameter of the vessel or is by 5% to 25% smaller. The diameter of the separation channel in the first and/or the second separator stage preferably correspond at least approximately to the diameter of the related first or second separator rotor, so that the first and/or the second separator rotor each preferably at least approximately cover the cross-section of the related section of the separation channel.

The separation channel is preferably delimited by channel walls. Preferably tubular or cylindrical channel walls are provided, which surround and preferably extend beyond the first and/or the second separator rotor. Particularly if the first and/or the second separator rotor is/are provided in the form of a propeller, then the rotor blades are preferably provided with elastic end pieces which contact the channel wall and remove foam therefrom.

In a preferred embodiment, a preferably cylindrical tube is provided at the inlet opening of the gas pump, which is extending around of the or into the or first separator rotor or into the separator channel, where it is overlapped by the rotor blades or by the cylindrical or conical basket formed by the rotor blades. The rotor blades and the cylindrical tube preferably overlap with a small radial distance for example of a few millimetres that ensures that the rotor blades are not contacting the cylindrical tube, while the remaining channel is kept small. This overlap of the rotor blades and the cylindrical tube dynamically seals the inlet opening of the gas pump, since foam, solid and liquid particles are practically unable to traverse the relatively long and thin path between the cylindrical tube and the rotor blades.

In a further preferred embodiment a shielding plate with transfer openings is provided at the entrance of the separation unit or the first separation stage. Most efficiently a disk shaped shielding plate is rotatably held so that foam is radially ejected and the transfer openings are kept open for the transfer of gas. A shielding plate is preferably connected to the motor shaft which also holds the first or second separator rotor.

The gas pump preferably comprises a pump housing with a pump chamber, which is adjoined by the inlet opening and an outlet opening, and which accommodates at least one fan preferably in the embodiment of a propeller, with which extracted gas is transported through the chamber with a suitable flow rate. The fan is connected to a motor, which can preferably be controlled by a control unit such that a desired flow rate can be adjusted.

The separator rotor and the at least one fan are preferably connected to a common motor shaft connected to the drive motor. The separator rotor is therefore operated practically without additional energy requirement. The separator rotor and the fan are designed such that for a given speed of rotation or a range of speeds of rotation a desirable gas flow rate is reached, while non-gaseous particles are reliably rejected. Typically, the size of the fan is increased if higher flow rates shall be reached.

The motor shaft is preferably traversing the separator channel or the separator channel and the pump chamber and is connected to the first and/or the second separator rotor, preferably in the center of the mounting plate.

The at least one fan is preferably arranged within the pump chamber and is preferably rotating within a tubular element having a diameter that corresponds to the diameter of the fan. However, the at least one fan can also be arranged within the separator rotor, e.g. within the basket formed by the rotor blades.

In preferred embodiments the gas pump and at least one of the separator stages are connected to a top cover that can be releasably mounted on top of the vessel. Hence, the gas pump and the separator unit can easily be removed for maintenance purposes.

Preferred embodiments of the reactor comprise a system for injecting a gas, for example air, into the vessel for insufflation of the process material and/or for pressure compensation.

In further preferred embodiments, the reactor comprises at least one heating unit, e.g. a heat exchanger and/or at least one microwave unit including at least one microwave generator.

Preferably at least one transfer tube is provided,
- which is made from microwave-transmissible material;
- which is connected with a first end to one of the outlet openings of the vessel;
- which is connected with at least one second end to one of the inlet openings of the vessel;
- which is arranged at least partially in front of the microwave unit so that microwave energy is transferable to the transported process material; and
that a first pump is provided, with which the process material is transportable through the at least one transfer tube.

By using a transfer tube made from microwave-transmissible material the flow of the circulated process material is separated from the microwave unit, while electromagnetic coupling is maintained. This allows the arrangement of at least one microwave unit at any suitable position adjacent to the transfer tube. Since there is no direct mechanical connection to the transfer tube required, the microwave units can be conveniently mounted and dismounted from the reactor in order to perform maintenance work, repair work or in order to increase or decrease the capacity of the microwave system.

In a preferred embodiment an end of the transfer tube or a nozzle connected thereto and a gas pipe or gas conduit, that is connected to a gas pump located outside of the vessel, are extending into a diffusion zone inside the vessel, into which recirculated process material is sprayed and mixed with an airflow. The air flow or gas flow brushes the liquid and facilitates the transfer of ammonia dissolved from the process material to the air or gas, allowing its effective removal. To reduce the boundary layer and, at the same time, to maximize the area of interaction, one or more nozzles are used that spray the liquid process material into the diffusion zone, where it is traversed by the gas stream. In this way the drops of the process material are immersed in the air or gas, ensuring a small boundary layer due to turbulence caused by the gas flow and a large exchange surface given by the surface of the drops. In this way, the process material is mixed with air or gas and is releasing ammonia before it falls down inside the vessel, where it is kept at a desired temperature by a heat exchanger and/or at least one microwave unit.

During the stripping process, solid and liquid parts of the process material are typically separated by gravitational force. However, foam, which may be produced by the insufflation of air within the diffusion zone, typically travels within the gas flow towards the exit opening. According to the invention foam, solid particles and liquid particles which travel in the gas flow towards the gas pump are rejected by the separator unit as described above.

The inventive reactor can be embedded in any apparatus or system that is used for treating a process material and extracting gaseous components and can be combined with any functional device used in apparatuses of the prior art such as means for mixing and/or heating and/or aeration/insufflation and/or circulation of the process material. Such means or devices may be arranged within or outside the reactor vessel or neighbouring tanks located in the process chain before or after the reactor.

The transfer of the process material between the process stages and tanks and vessels can be effected by pumps or wherever possible by gravitational force. The flow of process material and/or gas can further be controlled by valves. Preferably all motors, pumps, valves, heaters and any further device parts are controllable by a control unit, which is controlling the complete process of stripping ammonia, although it is also possible to install functional devices that are operated manually. In particular a control unit is preferably provided for controlling the motor or the motors of the separation unit.

### BRIEF DESCRIPTION OF THE DRAWINGS

Some of the objects and advantages of the present invention have been stated, others will appear when the following description is considered together with the accompanying drawings, in which:
- Fig. 1: shows schematically an apparatus 123, which is designed for the treatment of a process material and which comprises a first process stage 1, in which the process material is pre-treated; a second process stage 2 with an inventive reactor 2 that comprises a vessel 20, in which ammonia is stripped from the treated process material and foam is rejected by a separator stage S, and a third process stage 3, in which the fully treated process material is received;
- Fig. 2: shows a reactor 2 in a preferred embodiment with a housing 21 that is partially removed to show the vessel 20 that serves for receiving the process material, sewage or waste, which is circulated through transfer tube 25 coiled around the vessel 20 and from which gas such as ammonia enriched gas is stripped and forwarded by a gas pump 42 to an output opening 204, while foam is separated and rejected by a separator unit S;
- Fig. 3: shows the reactor 2 of Fig. 2 after the removal of the vessel 20 with the gas pump 42 for removing extracted gas from the vessel 20 and with the separator unit S with one separator stage S1 that comprises a first separator rotor 43;
- Fig. 4a: shows the gas pump 42 of Fig. 3 in a preferred embodiment connected to a first separator rotor 43 of the separator unit S;
- Fig. 4b: shows the gas pump 42 of Fig. 4a with the first separator rotor 43 cut along its longitudinal axis;
- Fig. 5: shows the gas pump 42 with the first separator rotor 43 cut along line A--A of Fig. 4a;
- Fig. 6: shows a gas pump 42 with a first separator rotor 43 in a further preferred embodiment;
- Fig. 7a: shows in sectional view a vessel 20 of an inventive reactor 2 with a top cover 219 that holds a separator unit S which comprises a first separator stage S1 and a further separator stage S*;
- Fig. 7b: shows the vessel 20 of Fig. 7a from above with a view to the gas pump 42 mounted on the top cover 219; and
- Fig. 8: shows in sectional view the top cover of Fig. 7a removed from the vessel 20.

### DETAILED DESCRIPTION OF THE PREFERRED EMBODIMENTS

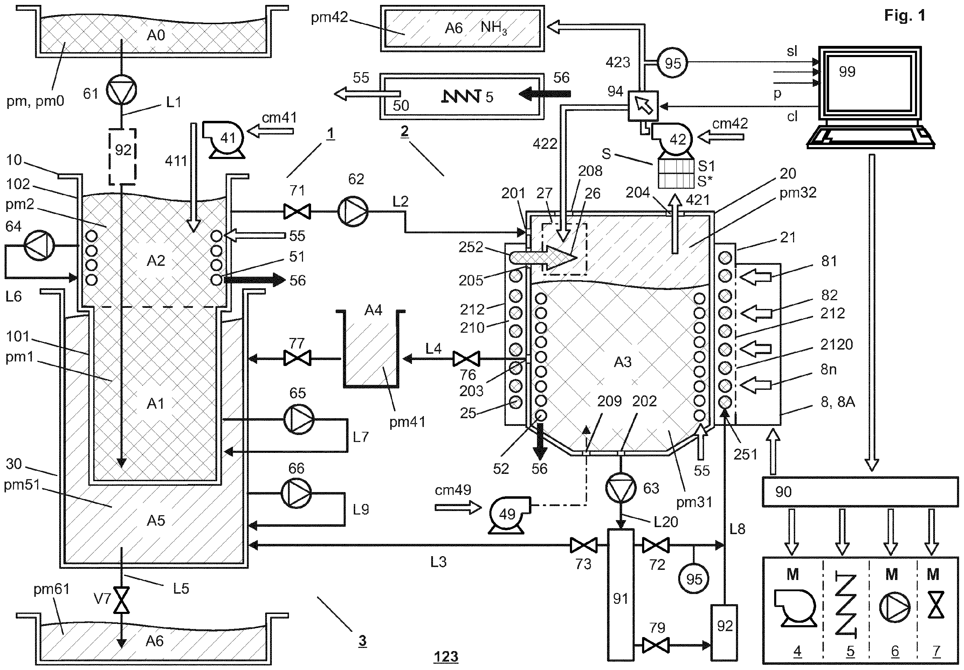

Fig. 1 shows schematically an apparatus 123, which is designed for the treatment of a process material and the extraction of gaseous components such as ammonia. The apparatus 123 comprises at least a first process stage 1, in which the process material is pre-treated; a second process stage 2 that comprises an inventive reactor 2 with a vessel 20, in which the gaseous component is stripped from the treated process material, and a third process stage 3, in which the fully treated process material is received. Below, the apparatus 123, which is shown as an example in order to describe the function of the inventive reactor 2, is briefly described.

The process material pm changes its properties and condition during the travel through the different stages of the apparatus 123 and is split in the reactor 2 into a liquid part pm31 and a gaseous component pm32. Different indices are assigned to the process material pm at points where properties and conditions change.

Process material pm0 to be treated is stored in a container or tank A0. From tank A0 the process material pm0 is transferred via input line L1, liquid pump 61 and preferably a bio-crack unit and/or a filter to a lower or primary segment 101 of a first tank. In the storage space A1 of primary segment 101 the process material pm1 is exposed to thermal energy provided by process material pm51 contained in the storage space A5 of a second tank 30 and is preheated. From storage space A1 process material pm1 is rising to the upper or, where the process material pm2 is heated in storage space A2 by a heat exchanger 51. The heat exchanger 51 receives hot water 55 from a boiler 50, which contains a heater element 5, and returns the water with reduced temperature 56. The secondary segment 102 of the first tank 10 is kept outside the second tank so that a heat transfer to the process material pm51 in the second tank 30 is avoided. In the secondary segment 102 of the first tank 10 the process material pm2 reaches temperatures typically in the range from 30°C to 90°C.

Optionally a gas pump or air pump 41 may be provided, which forwards air through conduit 411 into the primary and/or secondary segment of the first tank 10 for aeration or insufflation of the process material pm1, pm2. Gas pumps described here and below may be any devices suitable for conveying gaseous media. Such gas pumps may be provided in the embodiment of a fan.

Optionally, the process material pm1, pm2 and pm51 in the primary segment 101 and secondary segment 102 of the first tank 10 and in the second tank 30, is circulated via loop line L6 and pump 64, via loop line L7 and pump 65, and loop line L9 and pump 66, respectively, primarily in order to optimize the heat transfer.

From the first process stage 1, i.e. from the first tank 10, heated process material pm2 is forwarded via transfer line L2 and optionally liquid pump 62 to the inventive reactor 2, i.e. to an inlet opening 201 of a vessel 20 of the reactor 2. As indicated in the drawing the transfer of process material may also be executed by the gravitational force so that pumps (e.g. pump 62) are not required in such locations.

In the reactor 2, i.e. in the vessel 20, the received process material pm2 is split into a liquid part pm31 and into a gaseous part pm32, which is transferred driven by a gas pump 42 through an outlet opening 204 of the vessel 20, a conduit 421, the gas pump 42 and via a conduit 423 to a gas tank A6, where the gaseous component pm32 may be stored in the same or a different state of aggregation pm42.

In order to accelerate extraction processes a gas, e.g. air, is injected through an inlet opening 208 into the vessel 20 for insufflation purposes. In this preferred embodiment a gas pump 42 is provided which circulates gas taken of the vessel 20 via the output opening 204 conduits or gas pipes 422 and 421 and the inlet opening 208. Primary purpose of this gas circulation is to inject circulated gas into at least one diffusion zone 27, preferably a plurality of diffusion zones 27 inside the vessel 20 for insufflation purposes.

In a preferred embodiment the circulated process material 31 is injected or sprayed into the diffusion zone 27 from the second end piece 252 of the transfer tube 25 or the nozzle 26 connected thereto at an inlet opening 205 of the vessel 20.

Most preferably, the gas circulated via gas pipe 422 and the circulated process material 31 are injected via different inlet openings 205, 208 into the diffusion zone 27 and mixed there. In this way insufflation or aeration of the process material 31 is optimized. Aeration can be maximized by enlarging the diffusion zone 27 or providing a plurality of inlet openings 205, 208, a plurality of diffusion zones 27 at least one gas pipe 421 and a plurality of nozzles 26 connected to the second end of the transfer tube 25.

In a further preferred embodiment, circulated gas and circulated process material 31 are injected or sprayed in such a way into the vessel 20 that foam, which may occur in the diffusion zone(s) 27, is deflected back to the surface of the process material pm31. Hence, injection of circulated gas and process material pm31 is preferably done in the region above the process material pm31 stored in the vessel 20.

As an alternative or in combination with the circulation of gas and process material 31, air or gas is injected, e.g. pumped by a gas pump 49, through opening 209 into the vessel 20. This injection of air or gas, which is preferably done, as the lower side or the bottom of the vessel 20, serves for pressure regulation purposes and/or for accelerating extraction processes.

In case that gas pump 42 is extracting gas from the vessel 20, then gas pump 49 may inject air or gas into the vessel 20 in order to avoid underpressure/evacuation possibly leading to a collapse of the vessel 20. Preferably, the pressure in the vessel 20 is measured by a pressure sensor and the gas pump 49 is controlled accordingly by the control unit 99 to maintain the pressure in the vessel 20 in a predetermined range. The input opening 209 for injecting air or gas is preferably provided in the lower third of the vessel 20.

In Fig. 1 is illustrated that the gas pumps 41, 42 and 49 are controlled with by the control unit 99 via command lines or command signals cm41, cm42, cm49. The pressure in the vessel 20 is reported to the control unit 99 by input p. The pressure in the vessel 20 can therefore be set or controlled, e.g. with a closed loop, as desired.

Preferably, ammonia sensors 95 are provided, which measure the ammonia concentration in the gaseous part pm32 and/or in the liquid part pm31 within the vessel 20 and/or in the return or circulation line L8. Measured values are signalled via signal line sl to a control unit 99. The control unit 99, which comprises a control program, may receive signals from other sensors such as temperature sensors, pressure sensors, gas sensors, etc., and preferably observes and controls all processes executed in the apparatus 123. Via control lines cl gas pumps 4, heaters 5, liquid pumps 6, valves 7 as well as related motors M are controlled preferably via switching elements provided in a driving stage 90.

Based on sensor signals sl received for example from the ammonia sensors 95 the control unit 99 can decide, whether the ammonia concentration in the gaseous part pm31 is above or below a desired level. Accordingly, the control unit 99 can proceed with recirculating the gaseous part pm32 or forwarding the gaseous part pm32 towards the ammonia container A6. Accordingly the process unit can control one or more gates 94 through which the gaseous part pm32 is either recirculated or forwarded to the ammonia container A6. As described, separate circulation loops that are individually controlled may be provided.

Further, the control unit 99 can decide, whether the ammonia concentration in the liquid part pm31 is above or below a given level. In the event that the ammonia concentration in the liquid part pm31 is below said level, the liquid part pm31 can be forwarded to the third stage 3.

In a further preferred embodiment, the control unit 99 records curves or gradients of the sensor signals sl and uses this information in future process cycles for predicting when the ammonia concentration levels will be met. With each process cycle, which can be established for individually for different process material, such curves will get more reliable. By comparing a currently recorded curve with stored historical values or curves precise predictions can be made and corresponding information can be provided to the operator.

In storage space A3 of the vessel 20 the liquid part of process material pm31 is heated by a heat exchanger 52, which receives warm water 55 from boiler 50 and returns the water 56 with reduced temperature. Typical temperatures of the process material pm31 in the vessel 20 are in the range between 30°C and 100°C.

After completing treatment or ammonia stripping, process material pm31 is removed from the reactor 2, continuously or in batches. Process material pm31 can be transferred to the second tank directly via disposal line L3 or indirectly via disposal line L4 and intermediate tank A4. By opening valve 76 process material pm31 is transferred from the outlet opening 203 of the vessel 20 to the intermediate tank A4. By opening valve 77 process material pm41 is transferred from intermediate tank A4 to the second tank 30. In the embodiment shown, process material pm31 leaving the vessel 20 via an outlet opening 202 is forwarded via an outlet line L20 and a liquid pump 63 to a distributor 91, which comprises three outlet openings that can be opened or closed by assigned valves 72, 73 and 79, which can individually be controlled by the control unit 99.

By opening valve 73 the process material pm31 is transferred via disposal line L3 to the second tank 30. By opening valve 72 the process material pm31 is recirculated and forwarded via return or circulation line L8 and a transfer tube 25 to an inlet opening 205 of the vessel 20. By opening valve 79 the process material pm31 is recirculated and forwarded via a bio-crack unit 92, return line L8 and a transfer tube 25 to the inlet opening 205 of the vessel 20.

In the embodiments shown, the second tank 30 is used for receiving process material pm31, pm 41 at a temperature, which may be well above 50°C. In order to avoid energy losses, the thermal energy of the process material pm51 located in storage space A5 of the second tank 30 is transferred to process material pm1 located in storage space A1 of the first tank 10 as already described above. Subsequently, the cooled process material pm51 is transferred via output line L5 and valve V7 to a storage space in a terminal tank A5. The transfer of raw process material pm0 in tank A0 through the apparatus 123 to terminal tank A6 is thus completed.

Return line L8 is connected to a first end 251 of the transfer tube 25. The second end 252 of the transfer tube 25 or a nozzle 26 connected thereto is entered through inlet opening 205 into the vessel 20. Hence, outlet line 20, return line L8 and transfer tube 25 form a loop through which, driven by liquid pump 63, process material pm31 can be circulated similarly as described for loop lines L6, L7 and L9 in the first process stage 1.

The transfer tube 25 is made at least partially, preferably completely of microwave-transmissible material. Such microwave-material and the resulting transfer tube 25 is preferably also pressure resistant and/or temperature resistant and/or elastic, such as Teflon ^{®}, polypropylene, polymethylpentene, polysulfone, polyetherimide or any other microwave-transmissible polymer. The process material pm31 transferred in the transfer tube 25 can therefore be exposed to microwave energy irradiated from microwave sources or microwave generators 81, 82, ..., 8n that are located in one or a plurality of microwave units 8, 8A.

The housing 21 may comprise a single lateral wall 212 preferably adapted to the dimensions of geometry of the vessel 20 with an enlarged diameter that allows installation of the preferably coiled transfer tube 25 in a mounting space 210 left open between the housing wall 212 and the wall of the vessel 20.

In the event that the vessel 20 has a cylindrical form, then a housing 21 preferably with the form of a polygonal cross-section, preferably hexagonal or octagonal cross-section, can advantageously be used.

Fig. 1 schematically shows the housing 21 with the transfer tube 25 installed in the mounting space 210 and a microwave unit 8, 8A mounted on the right side of the housing 21. The hosing wall 212 has a window 2120 in front of the mounted microwave unit 8, 8A so that microwave energy emitted by the microwave generators 81, 82, ..., 8n (symbolically shown as arrows) can travel through the window 2120 towards the transfer tube 25, which consists of material or comprises microwave-transmissible material at least at the positions of the windows 2120.

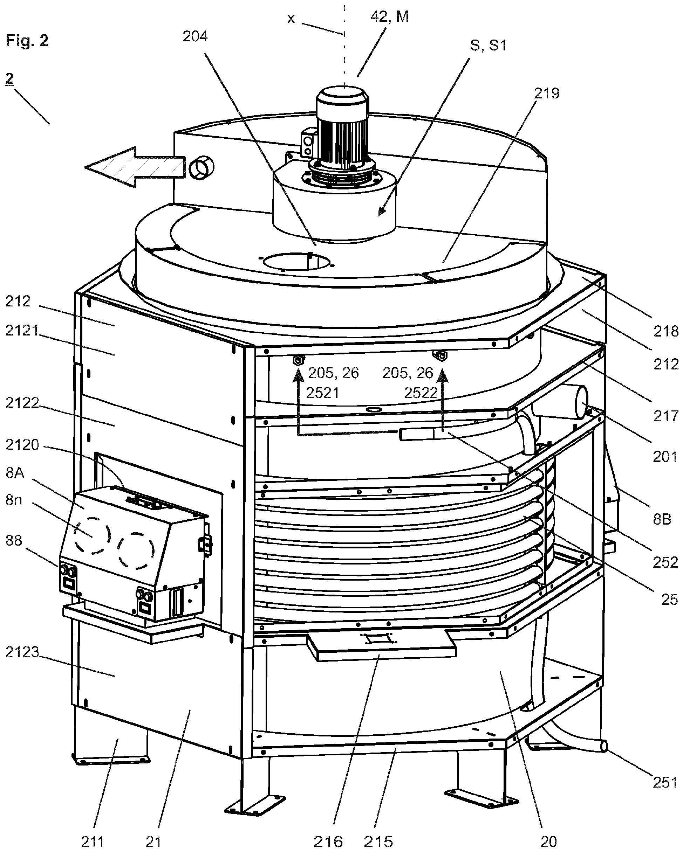

Fig. 2 shows the reactor of Fig. 1 in a preferred embodiment with a housing 21 that is partially opened to show the vessel 20 that serves for receiving the process material pm, sewage or waste. As described above, the process material pm can be circulated through the transfer tube 25, which is coiled around the vessel 20 at a height at which microwave units 8A, 8B are mounted on the side walls 212 of the housing 21. The sidewalls 212 comprise windows 2120 through which microwave energy can be radiated towards the microwave-transmissible transfer coil 25 and preferably in the direction of the central longitudinal axis x of the reactor 2. The housing 21 has the form of a hexagon with six sidewalls 212. In this preferred embodiment, each sidewall 212 consists of or comprises three wall segments 2121, 2122, 2123 which are removable. The central wall segment 2122, on which microwave unit 8A is mounted, has a window 2120 through which microwave energy can be transferred. In this embodiment between one and six microwave units 8A, 8B, 8c, 8D, 8E, 8F can be mounted. In the event that on one sidewall 212 no microwave unit 8 is required, then a central wall segment 2122 is installed, that does not comprise a window 2120.

Fig. 2 further shows the first end 251 and the second end 252 of the microwave-transmissible transfer tube 25. The first end 251 is connected, directly or indirectly to the outlet opening 202 at the lower end of the vessel 20. The second end 252 is connected to a plurality of smaller tubes 2521, 2522 that are guided to separate inlet openings 205 of the vessel 20 and are preferably connected each to a nozzle 26 through which the process material is sprayed into the vessel 20. The inlet openings 205 in the vessel 20 and the nozzles 26 extending through the inlet openings 205 are preferably arranged equidistant in a plane along the circumference of the vessel 20. Consequently a plurality of diffusion zones 27 is provided, which together form a common broad annular diffusion zone at the upper end of the vessel 20. In this way aeration of the process material is optimized.

Further shown is inlet opening 201, through which the vessel 20 can be filled with process material pm arriving from the first process stage 1. On top of the reactor 2 a gas pump 42 with a motor M is installed, with which extracted gas such as ammonia enriched gas is pumped out of vessel 20 and transferred via outlet opening 204 to ammonia tank A6 (see Fig. 1).

In this embodiment, the housing 21 also serves for holding the vessel 20 distant from the ground. For the described purposes, the housing comprises columns 211, a bottom plate 215, a first intermediate plate 216, a second intermediate plate 217, a top plate 218 for mounting the sidewalls 212 and for holding the coiled transfer tube 25.

Further, a top cover 219 is provided, on which the gas pump 42 is mounted, which forwards stripped ammonia to the exit opening 204 of the reactor 2. As described above foam typically builds up within such or a similar reactor 2 due to the impact of thermal energy, possibly mechanical movement and insufflation. Such foam tends to travel with the gas stream and to block or clog the reactor 2. In order to prevent this problem, a separator unit S is provided. The separator unit S of Fig. 2 comprises one process stage S1, which will be described below.

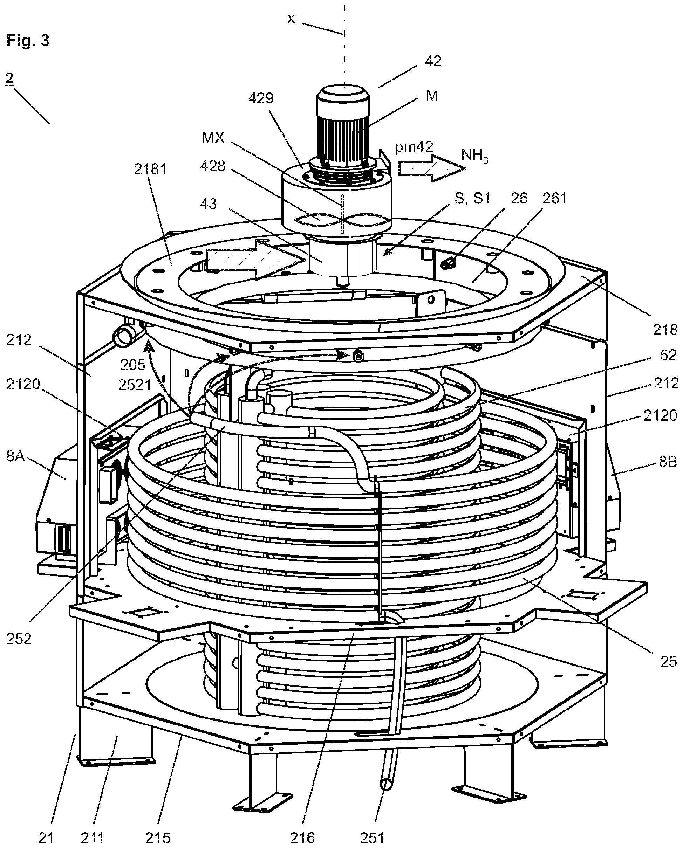

Fig. 3 shows the reactor 2 of Fig. 2 after the removal of the vessel 20 with the gas pump 42 for removing extracted gas from the vessel 20 and with the separator unit S, which comprises a separator rotor 43.

After removal of the vessel 20, the heat exchanger 52 is exposed. It is further shown, that the top over 218 comprises an annular flange 2181 on which the removed top cover 219 can be mounted. In this example, the top cover is screwed the annular flange 2181. In preferred embodiments, the top cover 219 is releasably connected by releasable mechanical connectors such as latches.

The second end piece 252 of the transfer tube 25 with the smaller tubes 2521, 2522 and nozzles 26 connected thereto are shown. The nozzles 26 are mounted equidistant on a mounting ring 261.

After removal of the top cover 219, the gas pump 42, which serves for circulating extracted gas and for transferring extracted gas out of the vessel 20, is exposed. The gas pump 42 is shown in a preferred embodiment with a motor M having a motor shaft MX, on which a fan 428, held inside a pump housing 429, and the separator rotor 43 are rotatably mounted.

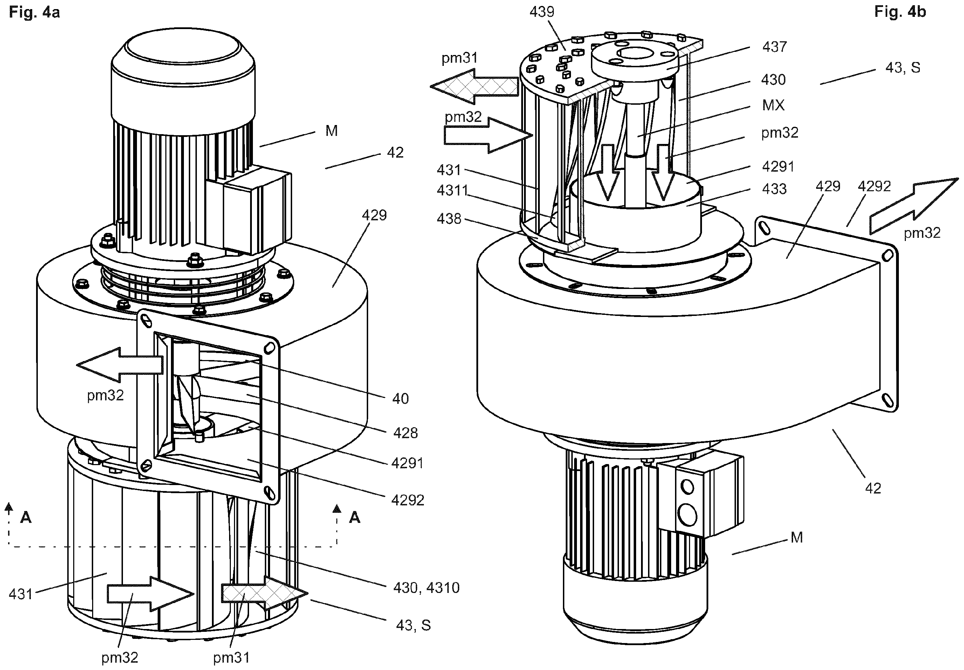

Fig. 4a shows the gas pump 42 of Fig. 3 connected to the separator rotor 43 of the separator stage S.

Fig. 4b shows the gas pump 42 of Fig. 4a with the separator rotor 43 in sectional view from below. The gas pump 42 and the separator unit S form a unity and can be attached to any top cover of a vessel 20.

The separator rotor 43, which is rotatably held by the motor shaft MX of a motor M, comprises rotor blades 431 that are separated by gaps 4310 from one another. The rotor blades 431 are aligned in parallel to the motor shaft MX and form a cylindrical wall of a basket, which encloses a separator channel 430 or a part thereof, which leads to the inlet opening 4291 of the gas pump 42 and that is accessible through the gaps 4310 between the rotor blades 431.

At the lower ends, the rotor blades 41 are connected to a mounting plate 439, which is connected by a hub 437 to the motor shaft MX. At the upper ends facing the gas pump 42, the rotor blades 431 are connected to a ring member 438. The mounting plate 439 and the ring member 438 hold the rotor blades 431 angularly equidistant and inclined relative to the cylindrical wall of the separator rotor 43 so that the trailing edge of the rotor blades 431 (when the separator rotor 43 is in operation) is offset towards the motor shaft MX and that the rotor blades 431 overlap.

The rotor blades 431 have approximately a rectangular form and are slightly curved towards the outside. Further, the leading edge of the rotor blades 431 is curved and tapered towards the upper end, which is not broader than the adjoining ring member 438. Hence, the separator channel 430 has the form of a truncated cone.

The neighbouring rotor blades 431 overlap one another like shingles, so that the separator channel 430 is not accessible in a direction perpendicular to the cylindrical wall of the separator rotor 43. As illustrated by arrows, the extracted gas pm32 can enter the separator channel 430 through the gaps or slots 4310 between the rotor blades 431, while non-gaseous particles of the process material pm31 are radially accelerated by centrifugal force and are ejected towards the side wall of the vessel 20.

Fig. 4b shows that a cylindrical tube 433 provided at the inlet opening 4291 of the gas pump 42 is extending into the separator rotor 43 or the separator channel 430, where it is overlapped by the rotor blades 431 or by the cylindrical or conical basket formed by the rotor blades 431, which are tapered accordingly. The cylindrical tube 433 and the corresponding ends of the rotor blades 431 form a dynamical seal, which inhibits passage of non-gaseous process material pm31.

The gas pump 42 comprises a pump housing 429 with a pump chamber 40 adjoined by the inlet opening 4291 on one side and an outlet opening 4292 on another side of the pump housing 429 and at least one fan 428 that is connected to the motor shaft MX of the motor M. The fan 428 may be of any conventional shape of a propeller known for example from ventilators. In this embodiment, the fan 428 is located within the chamber 40 of the pump housing 429 in front of the inlet opening 4291.

As illustrated in Fig. 4a and 4b, the extracted gas pm32 are therefore transported by the fan 428 with high efficiency through the separator rotor 43 and the pump chamber 40 towards the outlet opening 4292 of the gas pump 42, while non-gaseous process material pm31 is rejected.

Fig. 4b shows a sectional view of the separator rotor 43 with the motor shaft MX traversing the separator channel 430 up to the hub 437, which is connected to the mounting plate 439. It is shown that the fan 428 of Fig. 4a or at least one additional fan could also be mounted on the motor shaft MX within the separator channel 430. In a preferred embodiment the diameter of the separator rotor 43 could be enlarged, so that the fan 428 of Fig. 4a could be moved into the separator rotor 43. Most efficiently, the fan 428 could be mounted on the motor shaft MX within the cylindrical tube 433.

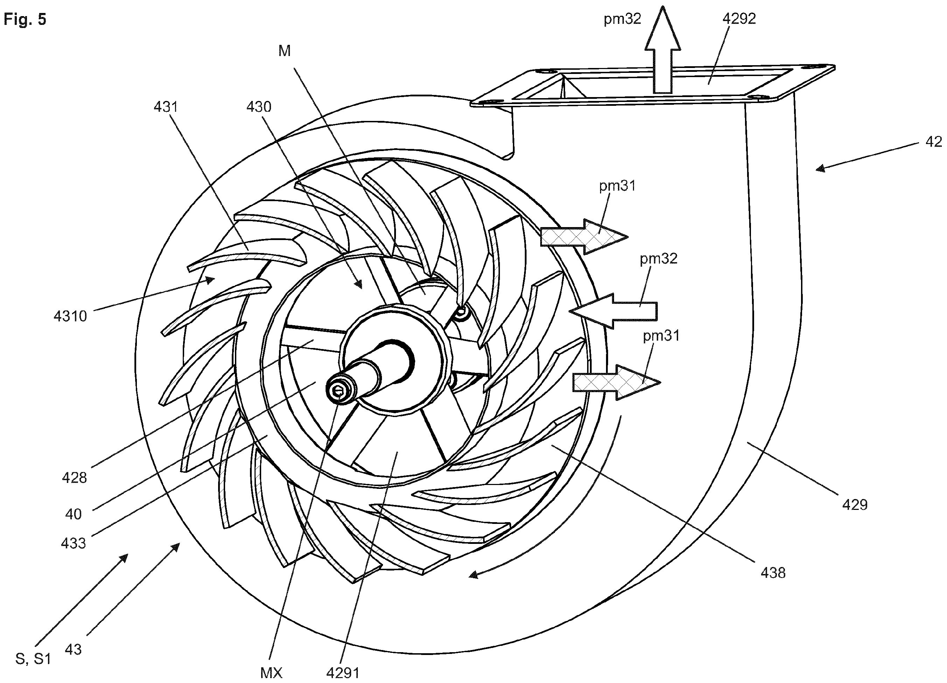

Fig. 5 shows the gas pump 42 of Fig. 4a with the separator 43 cut along line A--A. The elements of the gas pump 42 and the separator 43 have already been described with reference to Fig. 4a. The pump housing 429 is shown with a view into the pump chamber 40 in which the propeller 428 is held by the motor shaft MX which is extending through the cylindrical tube 425 into the separator 43, where it is connected to the mounting plate 439, which has been cut away.

It is shown that extracted gas pm32 can pass through the gaps or inlet channels 4311 between the rotor blades 431 into the separator channel 430 and can pass through the cylindrical tube 425 and the inlet opening 4291 into the pump chamber 40 and exit through the outlet opening 4292 of the gas pump 42. In a preferred embodiment, the gas pump 42 can be connected to a compensator fan (not displayed) for adjusting the output pressure.

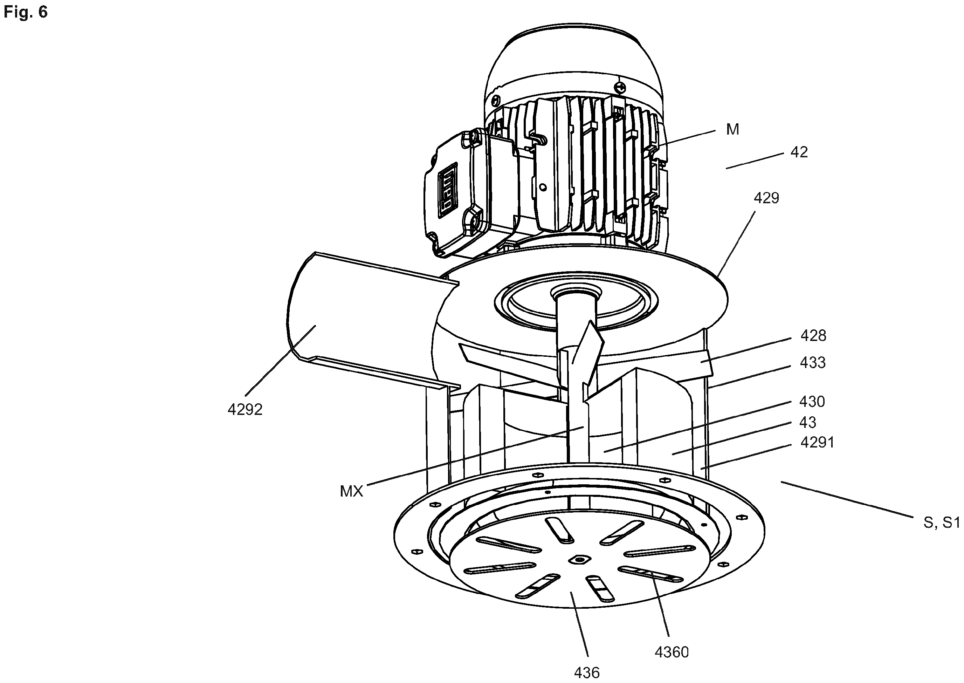

Fig. 6 shows a gas pump 42 with a first separator rotor 43 in a further preferred embodiment. It is shown that the lower end of the motor shaft MX is holding a circular shielding plate 436, which comprises radially extending slots 4360. The shielding plate 436, which is rotated together with the fan 428 and the separator rotor 43, is preventing foam from entering the separator channel 430 and is radially accelerating and ejecting the arriving foam, while ammonia can easily pass through the radially extending slots 4360. The shielding plate 436, which is at least approximately covering the cross-section of the separator channel 430, is therefore a first barrier against the arriving foam.

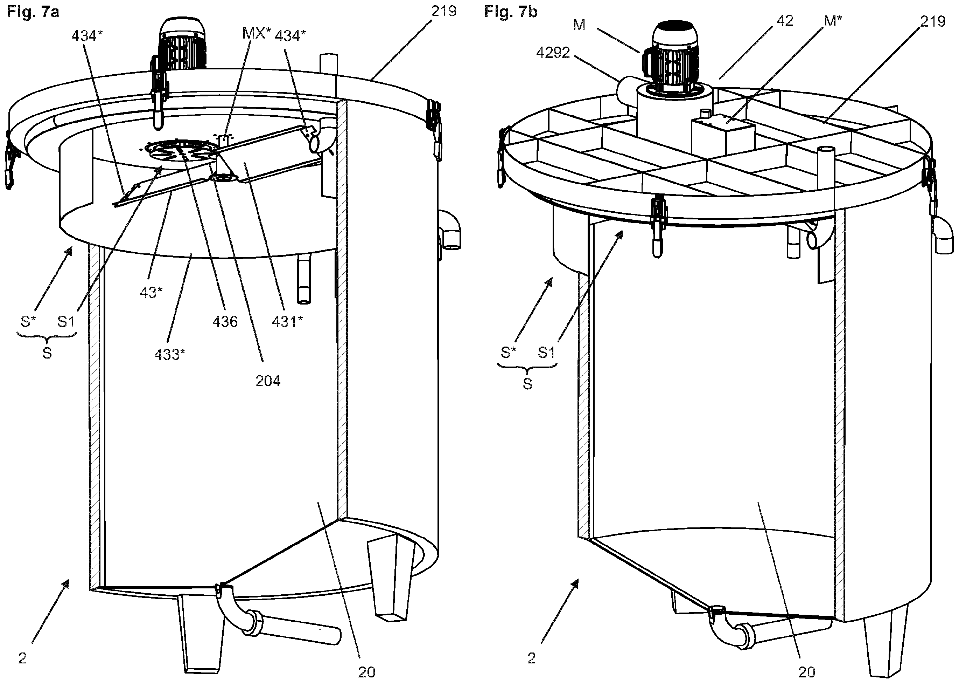

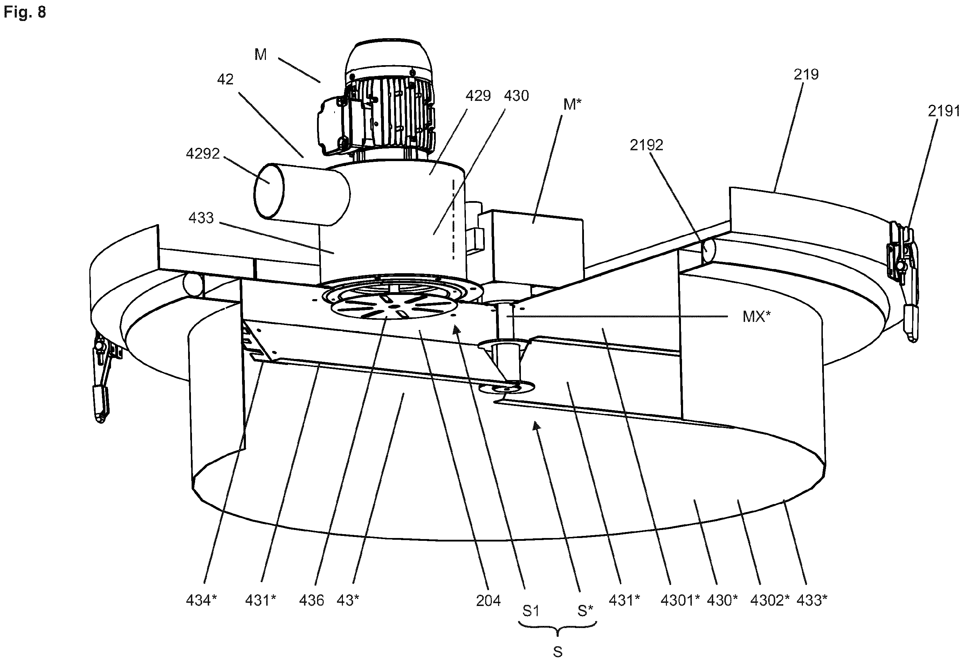

Fig. 7a, Fig. 7b and Fig. 8 shows an inventive reactor 2 with a separator unit S which comprises a first separator stage S1 as shown in Fig. 6 and a second separator stage S*, which is shielding the first separator stage S1, so that only a significantly reduced amount of foam can reach the first separator stage S.

Fig. 7a shows in sectional view the vessel 20 of the inventive reactor 2 with a top cover 219 that holds the gas pump 42 and the separator unit S.

Fig. 7b shows the vessel 20 of Fig. 7a from above with a view to the gas pump 42 mounted on the top cover 219.

Fig. 8 shows in sectional view the top cover of Fig. 7a removed from the vessel 20.

The gas pump 42 and the separator unit S with the first separator stage S1 and the second separator stage S* are fully integrated into the top cover 219 and can therefore easily be removed from the vessel 20 of the reactor 2. An outer peripheral flange is provided with latches 2191 which can be connected to or released from the vessel 20 in order to mount or dismount the top cover 219. In order to seal the connection between the vessel 20 and the top cover 219 a sealing ring 2192 is provided.

Gases, e.g. ammonia gas, stripped from the process material is traveling from the vessel 20 along a separator channel 430, 430* through the second separator stage S* and the first separator stage S1 to the output 4292 of the gas pump 42. Hence, the separator channel 430, 430* comprises a first channel section 430 and a second channel section 430*, which are adjoining one another. In the given example, the first channel section 430, which is surrounded by a first channel wall 433 has a diameter, which is smaller than the diameter of the second channel section 430*, which is also surrounded by a channel wall 433*. The first channel wall 433 is a hollow cylindrical element formed by an extension of the housing 429 of the gas pump 42. The second channel wall 433* is a hollow cylindrical element, which is mounted coaxially at the lower side of the top cover 219. Within the second channel wall 433* a second separator rotor 43* in the form of a propeller with rotor blades 431* is held rotatable by a motor axis MX* of a second motor M*. At the front ends the rotor blades 431* are provided with elastic end pieces 434*, which are sliding along the inner side of the second channel wall 433* to remove foam. The rotor blades 431* are inclined and fixedly turned in a direction such that the foam bubbles are broken and the foam remains pushed down into the vessel 20. Hence, the second channel section 430* is divided into an upper subsection 4301* above the second separator rotor 43* and a lower subsection 4302* below the second separator rotor 43*. Into the upper subsection 4301*, which adjoins the first channel section 430, only a reduced amount of foam can enter, which at first is rejected by the shielding plate 436 and is then expelled by the first separator rotor 43.

The first separator stage S1, which together with the gas pump 42 forms a unity, is arranged offset from the center of the top cover 219 and from the second motor M* located there. Hence, in this embodiment a first motor M is assigned to the first separator stage S1 and a second motor M* is assigned to the second separator stage S*. The first and second separator rotor 43, 43* can therefore be rotated with different speeds.

Due to the dual stage design the separator S can operate with high efficiency. The second separator stage S* always prevents the first separator stage S1 from being overloaded with foam. The first separator stage S1 can therefore eliminate or reject remaining foam completely.

In a further embodiment, the wall of the vessel 20 could form the second channel wall 433*. However this would make it more difficult to remove and insert the top cover 219 with the elastic end pieces 434* not getting damaged and properly contacting the wall of the vessel 20.

## Claims

1. Reactor (2) for treating a process material (pm), such as sewage or animal waste, and extract gas, particularly ammonia enriched gas therefrom, comprising
- at least one vessel (20) having
- at least one inlet opening (201, 205) for receiving the process material (pm);
- at least one outlet opening (202, 203) for removing or circulating treated process material (pm, pm31);
- at least one exit opening (204) for removing extracted gas (pm32) stripped from the process material (pm, pm31); and
- at least one gas pump (42), which is arranged adjacent to the exit opening (204) and with which the extracted gas (pm32) is transferable towards a concentration tank (A6),
**characterized in that** a separator unit (S) with at least one separator stage (S1, S*) is provided, which comprises a separator channel (430, 430*), through which the extracted gas (pm32) is transferable towards the at least one gas pump (42), and at least one separator rotor (43; 43*) rotatable within the separator channel (430, 430*) to allow transfer of extracted gas (pm32) to an inlet opening (4291) of the gas pump (42) and to shield the inlet opening (4291) of the gas pump (42) against the entry of non-gaseous process material (pm, pm31).

2. Reactor (2) according to claim 1, **characterized in that** the separator rotor (43, 43*) of each separator stage (S1, S*) is rotatably held by a motor shaft (MX, MX*) of a related motor (M, M*), and comprises rotor blades (431, 431*) that are separated by gaps (4310) from one another.

3. Reactor (2) according to claim 2, **characterized in that** the rotor blades (431, 431*) of the separator rotor (43, 43*) are arranged radially forming a propeller or that the rotor blades (431) of the separator rotor (43, 43*) are arranged in parallel or inclined relative to the motor shaft (MX) forming a cylindrical or conical basket that encloses a separator channel (430) through which the extracted gas (pm32) can travel to the inlet opening (4291) of the gas pump (42).

4. Reactor (2) according to claim 2 or 3, **characterized in that** the rotor blades (431) are arranged angularly equidistant from one another and/or that the rotor blades (431) are turned around their longitudinal axis by an angle in the range from 15° - 66° relative to the area or plane through which they travel.

5. Reactor (2) according to claim 2, 3 or 4, **characterized in that** the rotor blades (431) each have a first end extending towards the gas pump (42) and a second end extending away from the gas pump (42) so that the separator rotor (43, 43*) forms a basket.

6. Reactor (2) according to one of the claims 1 - 5, **characterized in that** the separator channel (430, 430*) of at least one of the separator stages (S1, S*) is enclosed by a channel wall (433, 433*), which is extending into or around of the separator rotor (43, 43*).

7. Reactor (2) according to claim 6, **characterized in that** in at least one of the separator stages (S1, S*) at least one of the rotor blades (431, 431*) of the related separator rotor (43, 43*) is provided with an elastic end piece (434*) that contacts the channel wall (433, 433*).

8. Reactor (2) according to one of the claims 1 - 7, **characterized in that** in at least one of the separator stages (S1, S*) at least one of the separator rotors (43, 43*) is connected via the related motor shaft (43, 43*) to a rotatable shielding plate (436), which is provided with openings (4360).

9. Reactor (2) according to one of the claims 1 - 8, **characterized in that** the separator unit (S) comprises
a first separator stage (S1) with a first separator rotor (43) held by a first motor shaft (MX) of a first motor (M) rotatable within a first separator channel section (430),
a second separator stage (S*) with a second separator rotor (43*) held by a second motor shaft (MX*) of a second motor (M*) rotatable within a second cylindrical channel wall (433*) that encloses a second separator channel section (430*) and that is extending into the vessel (20), and
which first and second separator channel sections (430, 430*) adjoin one another to form the separator channel (430, 430*).

10. Reactor (2) according to one of the claims 1 - 9, **characterized in that** the gas pump (42) comprises a pump housing (429) with a pump chamber (40) adjoined by the inlet opening (4291) and an outlet opening (4292) and at least one fan (428), which is connected to one of the motor axes (MX, MX*) provided in the separation stage (S).

11. Reactor (2) according to claim 10, **characterized in that** the at least one fan (428) is designed and drivable such that that extracted gas (pm32) is drivable through the separator channel (430, 430*) and the pump chamber (40) towards the outlet opening (4292) of the gas pump (42).

12. Reactor (2) according one of the claims 1 - 11, **characterized in that** the vessel (20) is provided with a fixed or releasable top cover (219) and that the gas pump (42) and the separation stage (S) are connected to the top cover (219).

13. Reactor (2) according one of the claims 1 - 12, **characterized in that** at least one transfer tube (25) is provided, through which the process material (pm31) contained in the vessel (20) can be circulated, or that at least one transfer tube (25) is provided, through which the process material (pm31) contained in the vessel (20) can be circulated through an area, where thermal energy is applied by at least one microwave generator (81) or at least one electrical heater.

14. Reactor (2) according to claim 13, **characterized in that** at least one gas pipe (421), through which air is transported or extracted gas (pm32) is circulated, and an end (252) of the at least one transfer tube (25) or a nozzle (26) connected thereto are extending into a diffusion zone (27) inside of the vessel (20), where recirculated process material (pm, pm32) is exposed to a flow of gas (pm32) or air.

15. Reactor (2) according to one of the claims 1- 14, **characterized in that** at least one further inlet opening (205, 208, 209) is provided in the vessel (20) below or above the process material (pm31) filled into the vessel (20) through which at least one further inlet opening (205, 208, 209) at least one of following materials gas or air or process material, namely gas or air, recirculated gas, recirculated process material (pm31), can be injected or sprayed into the vessel preferably controlled by the control unit (99).
